# EUROPEAN PATENT APPLICATION

(11) **EP 4 468 275 A1**
(43) Date of publication of application: **27.11.2024**
(21) Application number: 23743026.9
(22) Date of filing: 18.01.2023
(51) Int. Cl.: G09B 9/00, G09B 19/24, G09B 5/02

(54) **METHOD AND SYSTEM FOR SIMULATING AND LEARNING SKILLS AND KNOWLEDGE IN AUGMENTED REALITY ENVIRONMENTS**

(30) Priority: 19.01.2022 ES 202230040
(71) Applicant: Seabery Soluciones, S.L., 21005 Huelva (ES)
(72) Inventor: MARQUÍNEZ TORRECILLA, Pedro Gerardo, Maryland, Maryland 21146 (US); GARRIDO JURADO, Sergio, 14007 Córdoba (ES)
(74) Representative: TRBL Intellectual Property
(86) International application number: PCT/ES2023/070026
(87) International publication number: WO 2023/139304

(57) **Abstract**

The invention relates to an augmented reality system, comprising: an augmented reality visual representation apparatus (1); a plurality of workpieces (5) arranged in a physical space (4); an interaction tool (6), wherein said tool (6) is manipulable by the user (3); a processing apparatus (8) comprising an information storage module (9) configured to store information relating to a sequence of operations (10) and reference configurations (11) of objects (19), and to a plurality of interactions (12) performed by one or more users (3) of the simulation environment (2); and an evaluation module configured to compare the similarity between the sequence of operations (10) and reference configurations (11) of objects (19) and the interactions (12) performed by each user. The processing apparatus (8) comprises a module for generating an augmented reality simulation which implements, by means of software/hardware, a method according to any of the described embodiments.

## Description

### FIELD OF THE INVENTION

The present invention generally relates to a system and method for generating augmented reality simulations, and more specifically to a system and method intended particularly for learning skills and knowledge by means of said simulations. In this context, the invention is applicable in the educational field, and more preferably in the acquisition of expertise, skills and knowledge in STEAM (science, technology, engineering, the arts, and mathematics) fields, both directly and transversely, allowing the users of said method and system to acquire academic, professional, regulatory or procedural knowledge, based on the practice of specific disciplines through interaction with an augmented reality simulation environment, as well as learning soft skills, critical thinking, teamwork, problem solving, creativity and innovation.

### BACKGROUND OF THE INVENTION

Conventional augmented reality simulation systems require the three-dimensional localisation of various objects of interest with respect to a common reference system. To that end, there is a need to know, directly or indirectly, the position of the users of said systems in real time, in order to determine their point of view and to thus enable displaying different simulated graphical representations which are superimposed on actual captured images of the physical space in which the simulation is generated, in one or more regions of superimposition between said physical space and the simulation environment. This operating principle is used in an essentially similar manner in virtual reality systems, where all the visualized contents are simulated, and therefore not combined with images of the physical space (although said space must be analysed indirectly for the appropriate deployment of simulated elements in the virtual space). In general, although augmented reality and virtual reality are considered different immersive environments, in the present invention they shall be considered as equivalent. In this way, any reference to augmented reality shall also be considered as referring to virtual reality, and *vice versa,* as well as to any other related representation mode, such as mixed reality.

Additionally, in many of the known systems for simulating augmented or virtual reality environments, interaction with real objects or use thereof as tools is allowed. Therefore, it is also necessary to know the localisation of these objects in real time and with respect to the same reference system. In many commercial systems (Oculus, HTC Vive, etc.), these objects correspond to different interactive elements, as well as to various user controls or actuators, the movement of which allows interacting with the virtual or augmented simulation environment.

Moreover, augmented and virtual reality systems intended for skill training and learning such as, for example, the system described in patent application US 2020/0273365 A1 (VRSIM, Inc.), are known. Said systems are based on the generation of virtual or augmented object simulations on which the user can exercise disciplines such as industrial painting technique, welding technique, etc. Although this type of technologies is suitable for learning specific techniques, it has the limitation of not allowing their users to manipulate the workpieces as part of their training. In other words, said users must exercise the skills to be trained by means of operations that are carried out on fixed configurations of the workpieces. Therefore, in some fields where said manipulation is necessary (for example, mechanical or industrial repairs, automotive component design, polishing or roughing techniques, scientific experimentation, artistic disciplines such as sculpturing and, generally, any manual skill-based discipline or craft), these known systems are insufficient.

Building block-based augmented reality systems, particularly used in the toy industry such as, for example, the systems described in patent applications EP 2714223 B1 (LEGO AS) and EP 3511062 B1 (LEGO AS), are also known in the field of entertainment. Although these systems are intended for the detection of different configurations in the physical space of a set of workpieces (specifically, of connectable building blocks), they have the limitation of having generally fixed simulation environments, intended solely for the recognition of the building blocks as a whole or of the individual pieces, for the purpose of indicating to the users which should be the subsequent blocks to be used in said set, making it easier to perform the building processes. However, these systems do not take into account the possible variations of said sets when generating augmented content in the superimposition regions between the physical space and the simulation environment. Therefore, they are not designed to modify said regions based on different connection configurations of the blocks, rather they are designed to display additional content (for example, indicators of which subsequent block to be placed, or added elements that are represented together with the blocks), either to guide the user during building processes or to provide enhanced experiences. Therefore, in these systems, the blocks represented under augmented reality are always visualised as elements of a fixed nature. Although this is suitable to provide a better user experience in this type of toys, it is insufficient for learning another type of techniques where the connection of the workpieces involves a change of properties or nature in the elements they represent in the physical space. For example, in learning chemistry, the connection of different atoms can change their nature at the molecular scale, generating new bonds or properties depending on their specific orientation or arrangement.

According to the foregoing, there is a need in the field of the invention to provide augmented reality methods and systems intended for the learning of skills and knowledge, mainly in the STEAM fields or any other transverse knowledge acquisition technologies for skill acquisition (crafts or disciplines based, completely or partially, on manual skills), which present improved performance with respect to the known alternatives of the state of the art. The present invention allows satisfying the mentioned need by means of using a novel method for simulating and learning skills and knowledge in augmented reality environments, as well as a system adapted to implement said method.

### BRIEF DESCRIPTION OF THE INVENTION

The present invention is comprised in systems for the three-dimensional localisation of objects in augmented reality (AR) or virtual reality (VR) systems and allows solving the limitations of the state of the art mentioned above. The proposed system allows knowing in real time the 3D position and rotation of an object relative to a common reference system.

As mentioned in the preceding section, there is a need in the state of the art to have augmented reality methods and systems with application in the educational field and, more preferably, for the acquisition of skills and knowledge in the STEAM fields, which allow the users of said methods and systems to learn soft skills, critical thinking, teamwork, problem solving, creativity and innovation.

More specifically, the main object of the present invention relates to a method for simulating and learning skills in augmented reality environments, suitable for application to:
- a plurality of workpieces arranged in a physical space, wherein said workpieces are connectable to one another through manipulation thereof by a user; and to
- at least one interaction tool arranged in the physical space, wherein said interaction tool is manipulable by the user.

Advantageously, the method of the invention comprises performing the following steps, in any technically possible order:
a) generating, by means of an augmented reality visual representation apparatus, a simulation environment which is superimposed, at least in part, on the workpieces of the physical space, wherein said simulation environment is variable depending on the connection configuration of the plurality of workpieces in the physical space;
b) generating a set of simulation objects in the superimposition region of the simulation environment, wherein said objects are representations of physical objects with which the user can interact in said simulation environment, through the interaction tool in the simulation environment;
c) defining, in a processing apparatus connected to the visual representation apparatus:
   - a reference sequence of operations, associated with the interaction of the interaction tool with one or more of the objects of the simulation environment, through the manipulation of said interaction tool by the user;
   - a plurality of reference configurations of objects, associated with the connection configuration of the workpieces in the physical space;
d) showing to the user, by means of the visual representation apparatus, the simulation environment and the user performing:
   - a sequence of operations associated with the interaction of the interaction tool with one or more of the objects of the simulation environment, through the manipulation of said interaction tool by the user;
   - a plurality of connection configurations of the workpieces in the physical space, associated with the configuration of the objects in the simulation environment;
e) detecting, by means of a plurality of sensors comprised in the visual representation apparatus, the sequence of operations and the connection configurations performed by the user;
f) recording, with the processing apparatus, the sequence of operations and the connection configurations performed by the user and calculating the similarity thereof with the reference sequence of operations and with the reference configurations of objects.

In a preferred embodiment of the invention, the interaction tool is not integrated with the visual representation apparatus and said interaction tool can likewise be manipulated by the user. Particularly, in this embodiment the method comprises the following additional step:
g) generating at least one representation of the interaction tool in the simulation environment, by means of the visual representation apparatus.

In another preferred embodiment of the invention, the representation of the interaction tool in the simulation environment comprises additional elements associated with the operation characteristic of said tool, said elements comprising one or more of the following: welding materials, paint deposition, cutting grooves, cables, connection elements or fluid lines.

In another preferred embodiment of the invention, the representation properties of the objects generated in the superimposition region of the simulation environment are modified by the user, through the interaction of said user with the processing apparatus connected to the visual representation apparatus, by means of the interaction tool; and/or through the connection configuration of the workpieces (5) in the physical space. More preferably, the representation properties of the objects comprise the shape, colour, size and/or the material of said objects. Even more preferably, the representation properties may comprise indirect parameters of mechanical behaviour (rigidity, resistance, adherence, etc.), or even informative parameters (for example, the carbon footprint generated by a specific vehicle, obtained through a specific piece configuration).

In another preferred embodiment of the invention, the workpieces and/or the interaction tools of the physical space comprise one or more optical markers arranged thereon, wherein said markers are coded with optical information suitable for acquisition thereof by the sensors of the visual representation apparatus.

In another preferred embodiment of the invention, the representation of the tool in the simulation environment is shown, in the visual representation apparatus, as a welding implement, a painting implement, a blowtorch, a drill, a hammer, a chisel, a cleaning implement, a polishing implement, a roughing implement.

In another preferred embodiment of the invention, the method of the invention further comprises generating a score for the performance of the user depending on the similarity of the operations of the user and the sequence of operations and reference configurations of objects.

In another preferred embodiment of the invention, the method comprises additionally defining a plurality of users who interact, cooperatively or otherwise, in one and the same simulation environment, wherein a role is optionally assigned to each user and wherein the sequence of operations and configurations of objects comprises one or more interactions permitted to each user with respect to the objects and/or other users depending on said role; the interactions of the users in said simulation environment being synchronised, by means of the processing, by the processing apparatus, of the sequences of operations and configurations of objects performed by the users.

A second object of the invention relates to an augmented reality system comprising:
- an augmented reality visual representation apparatus, configured to generate and display a simulation environment to a user;
- a plurality of workpieces arranged in a physical space, wherein said workpieces are connectable to one another through manipulation thereof by a user;
- at least one interaction tool, where said tool is manipulable by the user; and
- a processing apparatus comprising an information storage module configured to store information relating to a sequence of operations and reference configurations of objects, and to a plurality of interactions performed by one or more users of the simulation environment; and an evaluation module configured to compare the similarity between the sequence of operations and reference configurations of objects and the interactions performed by each user.

Advantageously, in said system, the processing apparatus comprises a module for generating an augmented reality simulation which implements, by means of software/hardware, a method according to any of the preceding claims.

In a preferred embodiment of the invention, the visual representation apparatus and the interaction tool are integrated in one and the same device.

In another preferred embodiment of the invention, the device comprises a tablet, a telephone or a computer.

In another preferred embodiment of the invention, the visual representation apparatus comprises a plurality of sensors adapted to detect the position or orientation of the workpieces and, optionally, of the interaction tool in the physical space.

In another preferred embodiment of the invention, the interaction tool is not integrated with the visual representation apparatus and said interaction tool can likewise be manipulated by the user.

In another preferred embodiment of the invention, the interaction tool comprises a welding tool, a painting tool, a blowtorch, a striking tool, a cutting tool, a polishing tool and/or a roughing tool.

In another preferred embodiment of the invention, the processing apparatus comprises at least one of the following elements:
- audio reproduction and/or recording means, adapted to allow the interaction of the user with the simulation environment;
- external visualisation means for the simulation environment suitable to allow the visualisation, by other different users, of said environment and of the interactions performed by a user;
- a feedback module, adapted to record the information obtained from the users when performing interactions in the simulation environment;
- communication means configured to transmit information stored and/or processed by the processing apparatus to external devices or remote locations, through telematic networks.

More preferably, the feedback module for the user is further configured to:
- calculate a score depending on the information recorded from the user, according to the similarity between the sequences of operations and the reference configurations of objects, and the sequences of interactions performed by the user;
- provide to the user a plurality of indications of those interactions different from those comprised in the sequence of operations and reference configurations of objects; wherein said indications comprise at least one of the following: time used for the interactions with the objects, total time used for performing the interactions, unsuitable order of performing the interactions.

### DESCRIPTION OF THE FIGURES

To complete the description of the invention, a set of figures, which are an integral part of the description and illustrate a preferred embodiment of the invention, is provided. Said figures should be interpreted in a non-limiting illustrative manner and are described in detail below.
Figure 1 shows a general schematic view of the augmented reality system of the invention, in a preferred embodiment thereof.
Figure 2 shows a particular embodiment of the invention in which the interaction tool is not integrated with the visual representation apparatus and in which said interaction tool can likewise be manipulated by the user.
Figure 3 schematically shows the essential modules and components of the processing apparatus of the system of the invention, in a preferred embodiment thereof.
Figure 4 schematically shows a preferred embodiment of the system of the invention in which the workpieces and the interaction tools comprise one or more optical markers arranged thereon, and in which said markers are coded with optical information suitable for acquisition thereof by the sensors of the visual representation apparatus.

The mentioned figures are accompanied by a series of reference numbers corresponding to the following elements:
- (1): Visual representation apparatus
- (2): Simulation environment
- (3): User
- (4): Physical space
- (5): Connectable workpieces
- (6): Interaction tool
- (7, 7', 7"): Sensors
- (8): Processing apparatus
- (9): Information storage module
- (10): Reference operations
- (11): Reference configurations of objects
- (12): Interactions with the simulation environment
- (13): Evaluation module
- (14): Module for generating augmented reality simulations
- (15): Audio reproduction and/or recording means
- (16): External visualisation means for the simulation environment
- (17): Feedback module
- (18): Communication means
- (19): Objects of the simulation environment
- (20): Optical markers

### DETAILED DESCRIPTION OF THE INVENTION

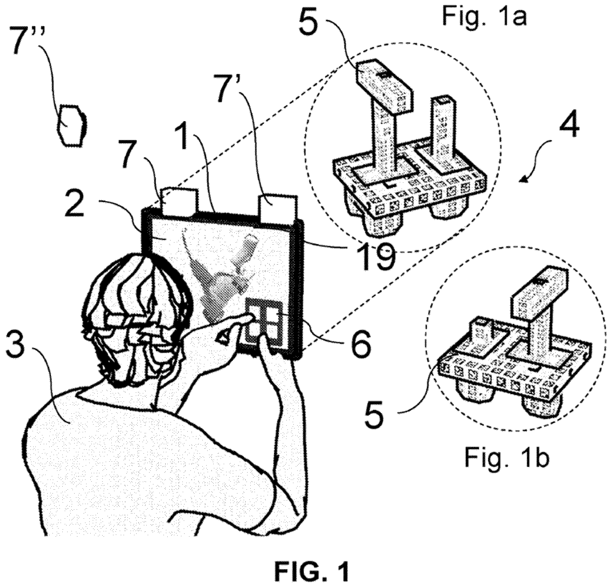

Figure 1 depicts a general schematic view of the augmented reality system of the invention in a first preferred embodiment thereof. Said system essentially comprises an augmented reality visual representation apparatus (1) configured to generate and display a simulation environment (2) to a user (3). In a preferred embodiment of the invention, the augmented reality visual representation apparatus (1) comprises a monitor or screen of a tablet-type device, a telephone or a computer. Therefore, the main function of the visual representation apparatus (1) is to provide an interface between the simulation environment (2) and the physical space (4) in which the user (3) is present, allowing the visualisation of a plurality of elements in said simulation environment (2), superimposed on the images of the physical space (4).

Likewise, the system of the invention essentially comprises a plurality of blocks or workpieces (5), also arranged in the physical space (4), wherein said workpieces (5) are connectable to one another through manipulation thereof by the user (3). The connection of the workpieces (5) is performed preferably by means of non-permanent attachments, for example non-permanent magnetic-type attachments, by tongue-and-groove, adhesive means, hook-and-loop closures or the like. In the case of magnetic attachments, in a possible embodiment of the invention, said attachments can have a configuration dependent on a specific direction of polarity (such that the workpieces (5) require a specific predefined orientation to be attached to other pieces (5)), or they can be independent of said specific direction of polarity (normally through a configuration based on a plurality of magnetic elements), such that the pieces (5) tend to attach to one another from certain proximity, regardless of their orientation. Said behaviour can be obtained, for example, by means of magnets housed in one or more inner spaces of the workpieces (5), and where they can move with a certain degree of freedom, modifying the orientation of the net polarity of the piece (5).

As shown in Figure 1, the workpieces (5) can adopt a plurality of shapes by means of the configuration of their connections. Therefore, by means of suitable shapes and sizes, the workpieces (5) can form volumes similar to the volumes of the physical objects on which the learning to be acquired will be based. For example, the workpieces (5) can configure, by means of their corresponding connections and shapes, an industrial component, a component for vehicles, aircrafts or any other means of transport, an electronic or computing component, a building or engineering component, a work of art, a scientific or mathematical diagram, etc. By way of example, the different configurations of the pieces can represent molecular configurations, material structures, different configurations of a vehicle, different elements of a sculpture, etc. Therefore, the main function of the workpieces (5) is to provide the different shapes and volumes in the physical space (4), by means of manipulating their connections, on which the images of the simulation environment (2) will be projected in the visual representation apparatus (1). By way of illustration, Figure 1 depicts two different configurations (details 1a and 1b) of one and the same set of workpieces (5), with one of them corresponding to a scooter-type vehicle and the other to a motorcycle, respectively.

In addition to the foregoing elements, the system of the invention essentially comprises at least one interaction tool (6) arranged in the physical space (4), wherein said interaction tool (6) is manipulable by the user (3). In a preferred embodiment of the invention, the interaction tool (6) can be part of a touch interface of a tablet-type device, a telephone or a computer. Examples of said interface are a touch screen (in tablets and telephones), a keyboard, a mouse, etc. In these embodiments, the visual representation apparatus (1) and the interaction tool (6) are preferably integrated in one and the same device (that is, a tablet-type device, the telephone or the computer), providing both the function of visualising the simulation environment (2) and the function of interacting with the mentioned environment (2).

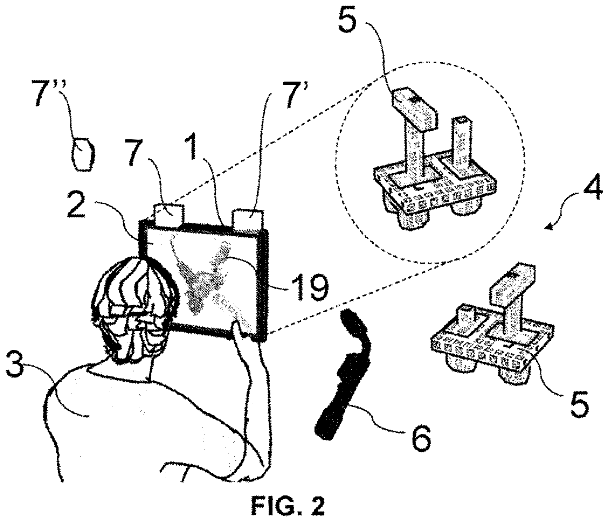

In another preferred embodiment of the invention shown in Figure 2, the interaction tool (6) is not integrated with the visual representation apparatus (1) and, likewise, said interaction tool (6) is manipulable by the user (3). In different embodiments of the invention, depending on the specific field of learning to which the system is applied, the interaction tool (6) may comprise a welding tool, a painting tool, a blowtorch, a striking tool, a cutting tool, a polishing tool, a roughing tool, etc.

Under the preceding embodiments, the visual representation apparatus (1) is preferably configured to detect the position and/or the orientation of both the workpieces (5) and, optionally, the interaction tool (6). To that end, said visual representation apparatus (1) will be equipped with one or more sensors (7, 7') (for example, cameras) adapted to detect the position or orientation of the workpieces (5) and of the interaction tool in the physical space. In other embodiments, external cameras (7"), not integrated with the visual representation apparatus (1), but connected thereto, can also be used. Furthermore, in other additional embodiments, the sensors can be part of other elements such as, for example, of the pieces (5) themselves (magnetic sensors, position sensors, proximity sensors, etc.). The different types of sensors applicable to the invention can be used alone or in combination.

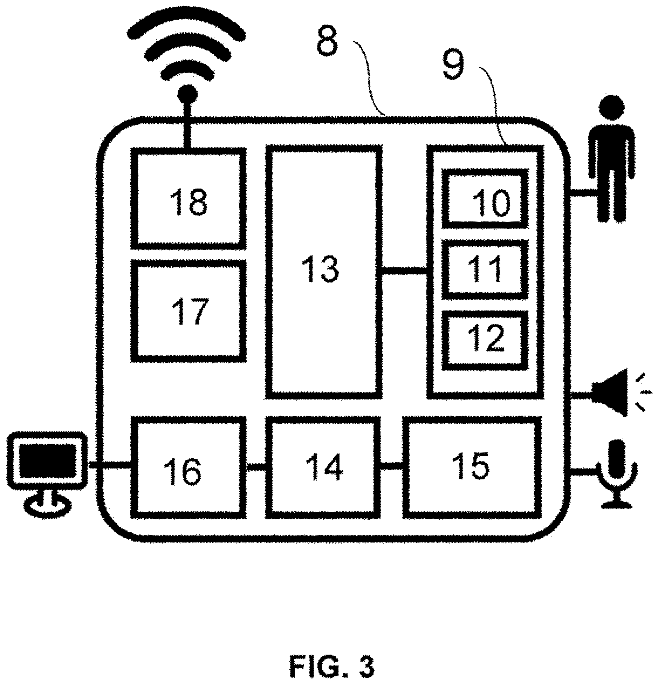

In order to generate information associated with the simulation environment (2) and with the actions performed by the user (3) in the physical space, and as shown in Figure 3, the system of the invention also essentially comprises a processing apparatus (8) which in turn comprises an information storage module (9), configured to store information relating to a sequence of operations (10) and reference configurations (11) of objects, and to a plurality of interactions (12) performed by one or more users (3) of the simulation environment (2); and an evaluation module (13), configured to compare the similarity existing between the sequence of configurations (11) of objects and the reference operations (10), and the interactions (12) performed by the users (3).

Moreover, in different particular embodiments of the described invention, the interaction tool (6) comprises, for example, one or more of the following: a welding tool, a painting tool, a blowtorch, a striking tool, a cutting tool, a polishing tool and/or a roughing tool. Said tools (6) can be both real tools for performing the described activities and representations of the real tools adapted in shape, size, weight, etc., to the real tools, for the purpose of providing a realistic experience to the user (3) when using the system.

In another embodiment of the invention, the processing apparatus (8) comprises at least one of the following elements:
- A module (14) for generating augmented reality simulations.
- Audio reproduction and/or recording means (15), adapted to allow the interaction (12) of the user (3) with the simulation environment (2) by means of voice.
- External visualisation means (16) for the simulation environment (2), suitable to allow the visualisation, by other users (3), of said simulation environment (2) and of the interactions (12) performed by a user (3) with said environment.
- A feedback module (17), adapted to record the information obtained from the users (3) when performing operations in the simulation environment (2). Said information can be used both for calculating the values of similarity with the operations (10) and the reference configurations (11) of objects, and for generating specific exercises based on the mentioned information.
- Communication means (18) configured to transmit information stored and/or processed by the processing apparatus (8) to external devices or remote locations, preferably through telematic networks.

In different embodiments of the invention, the visual representation apparatus (1) and/or the processing apparatus (8) can be connected locally, remotely and/or in a distributed manner to an e-learning system, made up of one or more servers and one or more client devices. Said system is connected through a communication network and a plurality of students can be evaluated by one or more teachers in said system. The e-learning system preferably comprises means adapted to record the operations and configurations performed by the students, as well as the assessments (based on the values of similarity obtained) made by the teachers.

Likewise and advantageously, the visual representation apparatus (1) and, optionally, the processing apparatus (8) implement, by means of software/hardware, a method according to any of the embodiments described herein. Said embodiments will be described in greater detail below.

As described, the method of the invention advantageously comprises performing the following steps, in any technically possible order:
a) Generating, by means of the augmented reality visual representation apparatus (1), a simulation environment (2) which is superimposed, at least in part, on the workpieces (5) arranged in the physical space (4), wherein said simulation environment (2) is variable, depending on the connection configuration of the plurality of workpieces (5) in the physical space (4).

According to step a) above, the method of the invention is based essentially on the modification of the simulation environment (2) depending on how the workpieces (5) are connected and/or grouped. This functionality is specifically shown in Figures 1a-1b, in which two different configurations of said workpieces (5) are depicted. As can be seen in said figure, the visual representation apparatus (1) is equipped with means which allow analysing the overall shape of the pieces (5) and their connections, generating a specific simulation environment (2) adapted to said shape, and which can change dynamically if said overall shape is modified. Therefore, the system of the invention allows automatically and reactively modifying the appearance of the augmented reality elements shown in the simulation environment (2), in response to the manipulation of the workpieces (5) by the user (3). The acquisition of STEAM-type skills and knowledge is thereby improved, based mainly on practice, as well as on direct interaction with the objects for learning new techniques and knowledge gradually shown to the user (3) as he/she manipulates the workpieces (5).
b) Generating a set of objects (19) in the superimposition region of the simulation environment (2), wherein said objects (19) are representations of physical objects with which the user (3) can interact with the simulation environment (2), through the interaction tool (6).

According to step b) above, for each configuration of the workpieces (5) selected in step a), the visual representation apparatus (1) and the processing apparatus (8) allow generating a plurality of virtual objects (19) in the simulation environment (2), in the superimposition region with the positions of the workpieces (5). By way of example, in an application of the invention intended for the development of skills in the automotive field, said objects (19) can be different components of a vehicle, the specific shape or model of which changes depending on the configuration of the workpieces (5) performed by the user (3), interacting with said pieces. Therefore, by arranging the mentioned pieces (5) in specific positions, objects (19) such as wheels, axles, steering elements, structural elements, etc., are generated.

Advantageously in the invention, the method likewise comprises the following steps:
c) Defining, in the processing apparatus (8) connected to the visual representation apparatus (1):
- a reference sequence of operations (10) of objects, associated with the interaction of the of the interaction tool (6) with one or more of the objects (19) of the simulation environment (2), through the manipulation of said interaction tool (6) by the user (3);
- a plurality of reference configurations (11) of objects (19), associated with the connection configuration of the workpieces (5) in the physical space.

The preceding step c) relates to the reference operations (10) which the user (3) must ideally perform for the suitable acquisition of skills or knowledge associated with the specific application of the invention. Typically, said operations (10) will be preconfigured and can be based on regulatory criteria (for example, when the training of a series of operations (10) associated with a technical protocol is required), pedagogical, academic or teaching criteria (when the operations (10) are associated with "best practice" when acquiring a specific skill or knowledge). Generally, the reference operations (10) will be associated with reference configurations (11) of the workpieces (5) and, therefore, of the virtual objects (19) associated therewith. A learning base is thus generated for the user (3), establishing how the user should ideally configure the workpieces (5) suitably in the physical space, as well as the specific operations that he/she should perform on said workpieces. Examples of these operations can be associated, in different applications of the invention, with welding, painting, cutting, striking, polishing, roughing methods, as well as with general methods for the assembly, repair, maintenance or installation of all type of apparatus. In other particular embodiments, the operations can also represent scientific-, academic- or artistic-type methods.
d) Showing to the user (3), by means of the visual representation apparatus (1), the simulation environment (2) and the user (3) performing:
- a sequence of operations associated with the interaction of the user (3) with one or more of the objects (19) in the simulation environment (2), through the manipulation of said interaction tool (6) by the user (3) in the physical space (4);
- a plurality of connection configurations of the workpieces (5) in the physical space (4), associated with the configuration of the objects (19) in the simulation environment (2).

According to step d) above, the user (3) effectively performs the operations and configurations associated with the acquired skills or knowledge, interacting with the simulation environment, through the interaction tool (6).
e) Detecting, by means of a plurality of sensors (7, 7') comprised in the visual representation apparatus (1), the sequence of operations and the connection configurations performed by the user (3).

According to step e) above, the operations and configurations of the user (3) are detected by the sensors (7, 7'), for example through cameras. In this way, the specific sequences of said operations and configurations can be detected for subsequent processing and analysis.
f) Recording, with the processing apparatus (8), the sequence of operations and the connection configurations of the workpieces (5) performed by the user (3) and calculating the similarity thereof with the sequence of operations (10) and with the reference configurations (11) of objects (19).

According to step f) above, the recording of the sequences of operations and the connection configurations of the workpieces (5) performed by the user (3), as well as the subsequent calculation of the similarity thereof with the sequence of reference operations (10) and configurations (11), allow establishing an estimator of the degree of suitable acquisition of skills and knowledge associated with each simulation since, if the similarity is high, it will indicate that the user (3) has performed the operations and the configurations as it would be done in the reference operations (10) and configurations (11).

In different embodiments of the invention, the calculation of similarity can be performed directly through the processing apparatus (8) itself, or by means of indirect estimation, for example, from the recording and reproduction of the operations and configurations performed repetitively by the user (3), and the automatic or manual comparison thereof with the reference operations (10) and configurations (11) (for example, the similarity being calculated by a human evaluator). Likewise, said evaluation can be a complete evaluation, with respect to all the operations and configurations performed by the user (3), or a partial evaluation, with respect to a part of the operations and configurations.

As described above in relation to the system of the invention, the interaction tool (6) can be, in a preferred embodiment, part of a touch interface of a tablet-type device, a telephone or a computer. In said embodiment, the interface can be, for example, a touch screen, a keyboard, a mouse, etc., such that the visual representation apparatus (1) and the interaction tool (6) are preferably integrated in one and the same device. In this way, the interactions (12) of the user (3) with the augmented reality simulation environment (2) will be performed preferably by means of said tool (6) by way of touch, cursors, visual aids, etc. By way of example, interactions (12) can be carried out on the screen of a mobile telephone, in which images of the physical space (4) are depicted with elements of the simulation environment (2) superimposed thereon.

Alternatively, in the embodiments in which the interaction tool (6) is not integrated with the visual representation apparatus (1), for example, when the tool (6) comprises a physical welding implement, a painting tool, a blowtorch, a striking tool, a cutting tool, a polishing tool, a roughing tool, etc., or a physical representation of any of the foregoing, the method of the invention comprises the following step:
g) Generating at least one representation of the interaction tool (6) in the simulation environment (2), by means of the visual representation apparatus (1);

The user (3) can therefore see, in the mentioned simulation space (2), an augmented representation of the tool (6), adapted to the skills or knowledge to be acquired. In different embodiments of the invention, the representation of the interaction tool (6) in the simulation environment (2) can include additional elements associated with the operation characteristic of said tool (6), such as welding materials, paint deposition, cutting grooves, cables, fluid lines, etc.

In another preferred embodiment of the invention, the user (3) can modify the representation properties of the objects (19) generated in the superimposition region of the simulation environment (2), through the interaction of said user (3) with the processing apparatus (8) connected to the visual representation apparatus (1), by means of an interaction tool (6) integrated in said apparatus (1, 8). In this embodiment, by way of example, a user (3) can select different wheel models which are superimposed on a specific workpiece (5), where said piece (5) is part of a vehicle under the representation thereof in the simulation space (2). More preferably, the representation properties of the objects (19) comprise the shape, colour, size and/or the material of the objects.

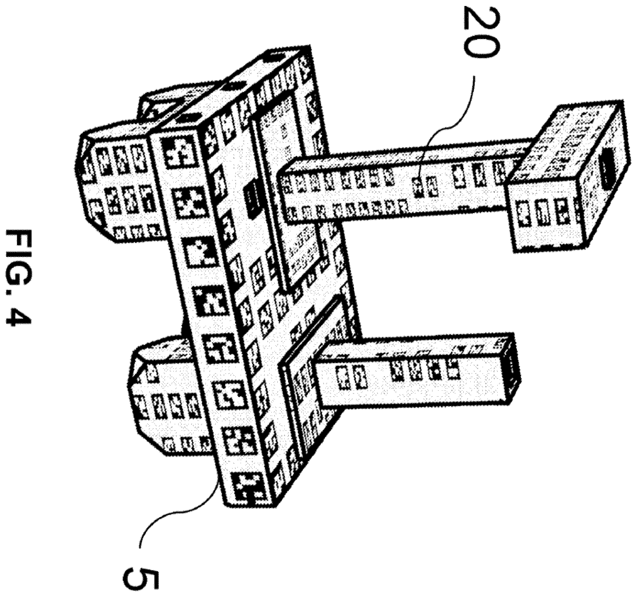

In another preferred embodiment of the invention shown in Figure 4, the workpieces (5) and/or the interaction tools (6) in the physical space (4) comprise one or more optical markers (20) arranged thereon, wherein said markers (20) are coded with optical information suitable for acquisition thereof by the sensors (7, 7') of the visual representation apparatus (1).

In another preferred embodiment of the invention, the method further comprises generating a score for the performance of the user (3) depending on the similarity of the interactions (12) of the user and the sequence of operations (10) and reference configurations (11) of objects (19).

In other preferred embodiments, it is possible to implement multiuser applications for the acquisition of skills and knowledge according to the invention.

Therefore, for example, in a preferred embodiment of the invention, the method further comprises defining a plurality of users (3) who interact, cooperatively or otherwise, in one and the same simulation environment (2), wherein a role is optionally assigned to each user (3) and wherein the sequence of operations and configurations of objects (19) comprises one or more interactions permitted to each user with respect to the objects (19) and/or other users (3) depending on said role; the interactions of the users (3) in said simulation environment (2) being synchronised, by means of the processing, by the processing apparatus (8), of the sequences of operations and configurations of objects (19) performed by the users (3).

In another preferred embodiment of the invention, the method further comprises:
- calculating a score depending on the information recorded from the user (3), according to the similarity between the sequences of operations (10) and the reference configurations (11) of objects (19), and the sequences of interactions (12) performed by the user (3); and
- provide to the user (3) a plurality of indications of those interactions (12) different from those comprised in the sequence of operations (10) and reference configurations (11) of objects (19); wherein said indications comprise at least one of the following: time used for the interactions (12) with the objects (19), total time used for performing the interactions (12), unsuitable order of performing the interactions (12).

## Claims

1. A method for simulating and learning skills in augmented reality environments, suitable for application to:
- a plurality of workpieces (5) arranged in a physical space (4), wherein said workpieces (5) are connectable to one another through manipulation thereof by a user (3); and to
- at least one interaction tool (6) arranged in the physical space (4), wherein said interaction tool (6) is manipulable by the user (3);
wherein the method is **characterised in that** it comprises performing the following steps, in any technically possible order:
a) generating, by means of an augmented reality visual representation apparatus (1), a simulation environment (2) which is superimposed, at least in part, on the workpieces (5) of the physical space (4), wherein said simulation environment (2) is variable depending on the connection configuration of the plurality of workpieces (5) in the physical space (4);
b) generating a set of simulation objects (19) in the superimposition region of the simulation environment (2), wherein said objects (19) are representations of physical objects with which the user (3) can interact in said simulation environment (2), through the interaction tool (6) in the simulation environment (2);
c) defining, in a processing apparatus (8) connected to the visual representation apparatus (1):
- a reference sequence of operations (10), associated with the interaction of the interaction tool (6) with one or more of the objects (19) of the simulation environment (2), through the manipulation of said interaction tool (6) by the user (3);
- a plurality of reference configurations (11) of objects (19), associated with the connection configuration of the workpieces (5) in the physical space;
d) showing to the user (3), by means of the visual representation apparatus (1), the simulation environment (2) and the user (3) performing:
- a sequence of operations associated with the interaction of the interaction tool (6) with one or more of the objects (19) of the simulation environment (2), through the manipulation of said interaction tool (6) by the user (3);
- a plurality of connection configurations of the workpieces (5) in the physical space (4), associated with the configuration of the objects (19) in the simulation environment (2);
e) detecting, by means of a plurality of sensors (7, 7') comprised in the visual representation apparatus (1), the sequence of operations and the connection configurations performed by the user (3);
f) recording, with the processing apparatus (1), the sequence of operations and the connection configurations performed by the user (3) and calculating the similarity thereof with the reference sequence of operations (10) and with the reference configurations (11) of objects (19).

2. The method according to the preceding claim, wherein the interaction tool (6) is not integrated with the visual representation apparatus (1), and wherein said interaction tool (6) can likewise be manipulated by the user (3), and comprising the additional performance of the following step:
g) generating at least one representation of the interaction tool (6) in the simulation environment (2), by means of the visual representation apparatus (1).

3. The method according to the preceding claim, wherein the representation of the interaction tool (6) in the simulation environment (2) comprises additional elements associated with the operation characteristic of said tool (6), said elements comprising one or more of the following: welding materials, paint deposition, cutting grooves, cables, connection elements or fluid lines.

4. The method according to any of the preceding claims, wherein the representation properties of the objects (19) generated in the superimposition region of the simulation environment (2) are modified by the user (3), through the interaction of said user (3) with the processing apparatus (8) connected to the visual representation apparatus (1), by means of the interaction tool (6); and/or through the connection configuration of the workpieces (5) in the physical space.

5. The method according to the preceding claim, wherein the representation properties of the objects (19) comprise the shape, colour, size and/or the material of said objects (19).

6. The method according to any of the preceding claims, wherein the workpieces (5) and/or the interaction tools (6) of the physical space (4) comprise one or more optical markers (20) arranged thereon, wherein said markers (20) are coded with optical information suitable for acquisition thereof by the sensors (7, 7') of the visual representation apparatus (1).

7. The method according to any of the preceding claims, wherein the representation of the tool (6) in the simulation environment (2) is shown, in the visual representation apparatus (1), as a welding implement, a painting implement, a blowtorch, a drill, a hammer, a chisel, a cleaning implement, a polishing implement, a roughing implement, a cable, a pipe.

8. The method according to any of the preceding claims, which further comprises generating a score for the performance of the user depending on the similarity of the operations of the user and the sequence of operations (10) and reference configurations (11) of objects (19).

9. The method according to any of the preceding claims, wherein a plurality of users (3) who interact, cooperatively or otherwise, in one and the same simulation environment (2) is additionally defined, wherein a role is optionally assigned to each user (3) and wherein the sequence of operations and configurations of objects (19) comprises one or more interactions permitted to each user with respect to the objects (19) and/or other users (3) depending on said role; the interactions of the users (3) in said simulation environment (2) being synchronised, by means of the processing, by the processing apparatus (8), of the sequences of operations and configurations of objects (19) performed by the users (3).

10. An augmented reality system comprising:
- an augmented reality visual representation apparatus (1), configured to generate and display a simulation environment (2) to a user (3);
- a plurality of workpieces (5) arranged in a physical space (4), wherein said workpieces (5) are connectable to one another through manipulation thereof by a user (3);
- at least one interaction tool (6), wherein said tool (6) is manipulable by the user (3);
- a processing apparatus (8) comprising an information storage module (9) configured to store information relating to a sequence of operations (10) and reference configurations (11) of objects (19), and to a plurality of interactions (12) performed by one or more users (3) of the simulation environment (2); and an evaluation module configured to compare the similarity between the sequence of operations (10) and reference configurations (11) of objects (19) and the interactions (12) performed by each user;
said system being **characterised in that** the processing apparatus (8) comprises a module for generating an augmented reality simulation which implements, by means of software/hardware, a method according to any of the preceding claims.

11. The system according to the preceding claim, wherein the visual representation apparatus (1) and the interaction tool (6) are integrated in one and the same device.

12. The system according to the preceding claim, wherein the device comprises a tablet, a telephone or a computer.

13. The system according to any of claims 10-12, wherein the visual representation apparatus (1) comprises and/or is connected to one or more sensors (7, 7', 7') adapted to detect the position or orientation of the workpieces (5) and, optionally, of the interaction tool (6) in the physical space (4).

14. The system according to the preceding claim, wherein the interaction tool (6) is not integrated with the visual representation apparatus (1), and wherein said interaction tool (6) can likewise be manipulated by the user (3).

15. The system according to the preceding claim, wherein the interaction tool (6) comprises a welding tool, a painting tool, a blowtorch, a striking tool, a cutting tool, a polishing tool and/or a roughing tool.

16. The system according to any of claims 10-15, wherein the processing apparatus (8) comprises at least one of the following elements:
- audio reproduction and/or recording means (15), adapted to allow the interaction of the user with the simulation environment (2);
- external visualisation means (16) for the simulation environment (2) suitable to allow the visualisation, by other different users (3), of said environment (2) and of the interactions (12) performed by a user (3);
- a feedback module (17), adapted to record the information obtained from the users (3) when performing interactions (12) in the simulation environment (2);
- communication means (18) configured to transmit information stored and/or processed by the processing apparatus (8) to external devices or remote locations, through telematic networks.

17. The system according to the preceding claim, wherein the feedback module for the user is further configured to:
- calculate a score depending on the information recorded from the user (3), according to the similarity between the sequences of operations (10) and the reference configurations (11) of objects (19), and the sequences of interactions (12) performed by the user (3);
- provide to the user (3) a plurality of indications of those interactions (12) different from those comprised in the sequence of operations (10) and reference configurations (11) of objects (19); wherein said indications comprise at least one of the following: time used for the interactions (12) with the objects (19), total time used for performing the interactions (12), unsuitable order of performing the interactions (12).

18. The system according to any of claims 10-17, wherein the connection of the workpieces (5) is performed by means of non-permanent magnetic-type attachments, by tongue-and-groove, adhesive means, hook-and-loop closures, or a combination thereof.

19. The system according to the preceding claim, wherein the attachments are magnetic attachments and wherein said attachments further have an attachment configuration independent of a specific direction of polarity.
